# EUROPEAN PATENT SPECIFICATION

(11) **EP 2 234 780 B1**
(45) Date of publication and mention of the grant of the patent: **01.11.2017**
(21) Application number: 08866952.8
(22) Date of filing: 24.12.2008
(51) Int. Cl.: B29B 17/00, B29D 11/00, G02B 26/06

(54) **METHOD OF RELEASING AN ADAPTIVE OPTICAL PLATE AND ASSEMBLY OF A SUPPORT AND PEELING ARRANGEMENT**
VERFAHREN ZUR FREIGABE EINER ANPASSBAREN OPTISCHEN PLATTE UND ANORDNUNG FÜR EINE STÜTZ- UND SCHÄLANORDNUNG
PROCÉDÉ DE LIBÉRATION D'UNE PLAQUE OPTIQUE ADAPTATIVE ET ASSEMBLAGE D'UN SUPPORT ET AGENCEMENT DE PELAGE

(30) Priority: 28.12.2007 EP 07150483
(43) Date of publication of application: 06.10.2010
(73) Proprietor: Nederlandse Organisatie voor toegepast- natuurwetenschappelijk onderzoek TNO, 2595 DA 's-Gravenhage (NL)
(72) Inventor: NIJENHUIS, Jan Roelof, 2625 LM Delft (NL); HEIJMANS, Jeroen Antonius Cecillia, 5261 EL Vught (NL)
(74) Representative: V.O.
(86) International application number: PCT/NL2008/050852
(87) International publication number: WO 2009/084956

(56) References cited:
- EP-A- 1 315 156
- WO-A1-2016/081391
- JP-A- 4 211 203
- JP-A- 10 195 391
- JP-A- H11 203 736
- US-A- 4 155 962
- US-A- 5 349 443
- US-A1- 2005 213 209
- US-A1- 2006 158 753

## Description

The invention relates to a method for releasing an adaptive optical plate from a support arrangement.

The invention also relates to an assembly of a support arrangement for support a plate and peeling arrangement for pulling a plate from the support arrangement.

In the field of adaptive optics, mirrors or lenses are used that may have a thickness/surface ratio of approximately 1:1000. When these thin plates are handled, e.g. picked up, these plates may be damaged for example by breakage or deformation. For example, adaptive mirrors, which may be used in astronomical applications such as telescopes, need to be released from their support arrangements from time to time to be provided with a new coating, and/or to be replaced. These mirrors are for example supported by a support arrangement at over 12.000 points by 12.000 little magnets that are connected to the mirror. These magnets are connected to 12.000 protrusions having diameters of 1,5 mm, for example. If the force to release one magnet is about 2 Newton, the total force for releasing the whole mirror would be about 24.000 Newton. Therefore, when the mirror comprises glass, and is released, the mirror oftentimes breaks. There is again a high risk of breaking when placing back the adaptive mirror on its support arrangement. The mirror can also be made from a thin metal sheet, for example Beryllium or other materials. Here the issue is not the fracture but the plastic deformation that may occur when placing or removing the membrane from the actuators.

EP 1315156 discloses a method of peeling apart compact discs using blown gas.

Therefore it is one of the objects of the invention to provide for an efficient method and/or arrangement wherein an adaptive optical plate can be released from its support while damage to the plate is prevented.

In a first aspect of the invention this object and/or other objects may be achieved by a method of releasing an adaptive optical plate from an adaptive optical arrangement supporting the adaptive optical plate using a peeling arrangement according to claim 1.

To release a thin adaptive optical plate according to the invention, first a pulling force is exerted to an area of the optical plate such that this area is lifted from a support arrangement for a small distance, wherein preferably this area is located at the edge of the plate. At the same time a second area of the plate at an adjacent location, preferably located further away from said edge than the first area, is still abutting the support arrangement. The small lifting distance of the first area is however small enough to prevent damage, e.g. by too much deformation or fracture of the plate. Subsequently, the second area of the plate is lifted at said adjacent location, while a third area adjacent the second area is still abutting the support arrangement. This lifting process over distances small enough to prevent damage is repeated sequentially along the plate for third and further areas in a way that the plate is peeled or 'zipped' from the supporting surface. In a preferred embodiment, the plate originally has a straight shape, whereas during peeling the plate takes on a curved shape.

In the field of adaptive optics thin large plates are used that are suitable to be used as or in an adaptive mirrors or adaptive lens. Among others, the invention recognises that under certain conditions it is possible to 'peel' such commonly brittle, i.e. non-flexible, thin adaptive optical plates from a support surface without breaking or damaging the plate, and despite the fact that such plates are highly fragile and there is a high risk of breakage when handling such plates.

Next to brittle materials, the invention also applies to adaptive optical plates comprising thin, ductile materials. For example a foil or sheet may form an adaptive optical plate or a part thereof. These thin plates are less likely to break, but are more likely to undergo deformation when they are taken of the support surface. Especially in adaptive optics, wherein the mirror is adhered via a multitude of contact points deformation causing permanent damage may easily occur. However, 'peeling' off the plate according to the method of the invention, by sequentially lifting neighbouring areas of the support surface, may prevent such deformation.

Adaptive optical plates according to the invention may comprise brittle material such as glass materials such as Zerodur, ULE, Borosilicate, Pyrex, fused silica, and others, or ceramic materials such as for example Silicon Carbide or Silicon, preferably pure Silicon. In the field, brittle materials have the property of being able to withstand elastic deformation until the point of failure. After failure approximately zero plastic deformation results. Herein, "approximately zero" may for example be interpreted as 0,1% or less. Brittle materials may for example have a maximum strain (e) of approximately zero percent, or for example 0,1% percent or less after failure. In the above, plastic deformation may be interpreted as lasting deformation, as opposed to elastic deformation. For example, elastic deformation will occur when bending the plate. 'Brittle material' may also be understood as being 'non-ductile' material. The adaptive optical plates may also comprise metal foils such as for example beryllium copper, aluminium, or polymers having reflective coatings, such as Polyimide for example. The common characteristic is that they are suitable to be used in precision optics, and that the plate is relatively thin as compared to its surface.

Deformation and/or breaking causing damage may be prevented through the fact that the subsequent forces that are applied to the plate are small compared to one force that would need to be applied to lift the same plate in its entirety at once. Separating the thin adaptive mirror from the support arrangement can now be achieved at relatively low risk, low costs and efficiently.

The plate has a small thickness as compared to its surface dimensions. Preferably, the thickness of the plate is 1000 times smaller, or less than 1000 times smaller than the width or length of the plate.

In a second aspect of the invention this object and/or other objects may be achieved by an assembly of an adaptive optical arrangement for supporting an adaptive optical plate which has a thickness less than 100 times smaller as compared to its surface dimensions and a peeling arrangement for releasing such a plate from the adaptive optical arrangement according to claim 7.

In clarification of the invention, these and further embodiments of the invention, and advantages thereof will be further elucidated with reference to the drawing. In the drawing:
figure 1 and 1A show schematic side views of four steps of thin plate peeling methods;
figure 2 shows a schematic side view of a peeling arrangement;
figure 3 shows a top and side view of an adaptive optical plate;
figure 4 shows a perspective view of a peeling arrangement;
figures 5A and 5B show schematic front views of a peeling arrangement and peeling method;
figure 6A-C show a peeling method and arrangement;
figure 7 shows a peeling arrangement.

In this description, identical or corresponding areas have identical or corresponding reference numerals. The exemplary embodiments shown should not be construed to be limitative in any manner and serve merely as illustration.

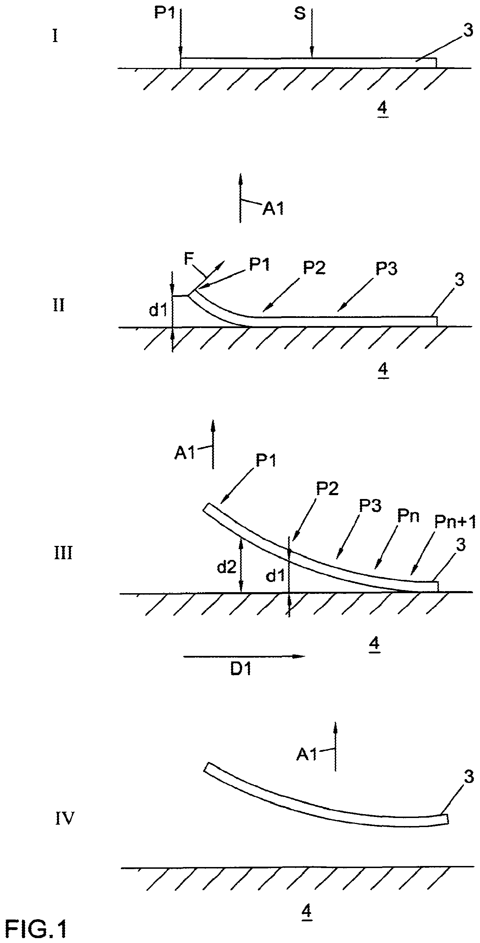

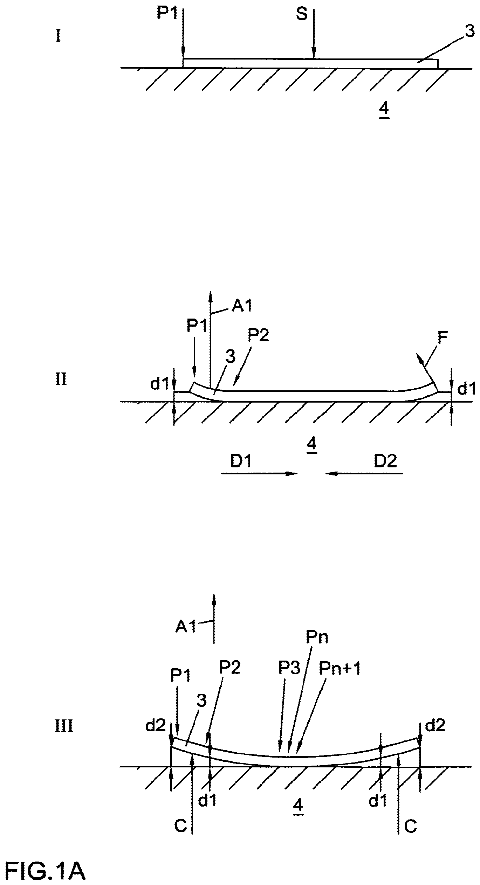

In figure 1 a method according to the invention is shown in steps I - IV, wherein an adaptive optical plate 3 is peeled from a support arrangement 4 for the adaptive optical plate 3. The plate 3 comprises an adaptive mirror or is a part, for example a layer, of an adaptive mirror. In this embodiment the plate 3 comprises glass. The support arrangement 4 may form part of the adaptive optical arrangement, for example a telescope having a support arrangement 4 for the glass plate 3. In the first step I of the method, the plate 3 has a substantially straight surface S. As can be seen, the plate 3 is supported by the support arrangement 4 substantially along its entire surface S. In an embodiment, the plate 3 and the support arrangement 4 for example have substantially straight surfaces, or are at least parallel to each other, and therefore there can be a strong adhesion between the surfaces, for example caused by one or a combination of underpressure, grease, Van der Waals forces, glue, adhesion, electrostatic, multiple electro or permanent magnets, suction, etc. In a further embodiment, the glass plate 3 is connected to the support arrangement 4 via multiple contact surfaces, for example one or a combination of magnets, suction elements, multiple glue or adhesion surfaces, etc. For example, in adaptive optics, the plate 3 may be connected to the support arrangement 4 via magnets. In this example the plate 3 comprises glass, although any plate 3 that can be used as a thin mirror. Such material may for example comprise brittle material such as glass materials such as Zerodur, ULE, Borosilicate, Pyrex, fused silica, and others, ceramic materials such as for example Silicon Carbide or pure Silicon, but also metal foils such as for example beryllium copper, aluminium, or polymers having reflective coatings, such as Polyimide for example..

As shown in step II, a first area p1 of the adaptive mirror plate 3 is moved with respect to the support arrangement 4 for the plate 3, in a direction A1 away from the support arrangement 4, while a second area p2 and further area's p adjacent the first area p1 abuts the support arrangement 4. In the shown example the first area p1 comprises an edge area. The first area p1 is moved over such a small distance d1 that the plate 3 does not deform or break. Subsequently, as shown in step III, the second area p2 is moved over a small distance d1 with respect to the support arrangement 4 in a direction A1 away from the support arrangement 4, while a third area p3 adjacent the second area p2 still abuts the support arrangement 4. At the same time the distance d2 between the first area p1 and the support arrangement may increase. In the same manner (not shown) sequentially further areas pn are moved with respect to the support arrangement 4 in a direction A1 away from the support arrangement 4, while respective adjacent areas pn+1 abut the support arrangement 4. Said areas p1, p2, p3, pn, pn+1 are sequentially moved with respect to the support arrangement 4, with increasing distance, in a direction A1 away from the support arrangement 4. The lifting forces to the glass plate 3 are applied in a travelling direction D1 such that the plate 3 is peeled from the support arrangement 4. In the travelling direction D1 along which the areas p1, p2, p3, pn, pn+1 are sequentially released from the supporting arrangement 4 the distance d1, d2 between the glass plate 3 and the support arrangement 4 increases. The distance d1 between the glass plate 3 and the support arrangement 4 increases at the edges of the plate 3 while the plate 3 is peeled, preferably in such a way that the plate takes on a curved shape with respect to the support arrangement 4. In possible embodiments, both the support arrangement 4 and the plate 3 may have a curved shape, wherein in case of a concave support arrangement 4 the radius of curvature of the plate 3 may increase during peeling, and in case of a convex shaped support arrangement 4 the radius of curvature of the plate may for example decrease during peeling. In a preferred embodiment, the plate 3 is peeled off in a direction D1 until at last the outer edge is peeled off and the plate can be taken off in a direction A1 (see additional step IV), as can be seen from figure 1. As can be seen in figure 1A, the plate 3 can for example also be peeled in two travelling directions D1, D2 such that in the end, the last glass plate area abutting the support arrangement 4 is approximately in the middle, at least seen from a front view.

In practice there can be infinite areas p that are sequentially lifted from the support arrangement 4 when the plate 3 is peeled. In other examples, the plate 3 is supported by multiple contact points or contact surfaces, such that the plate 3 can be peeled row after row, for example.

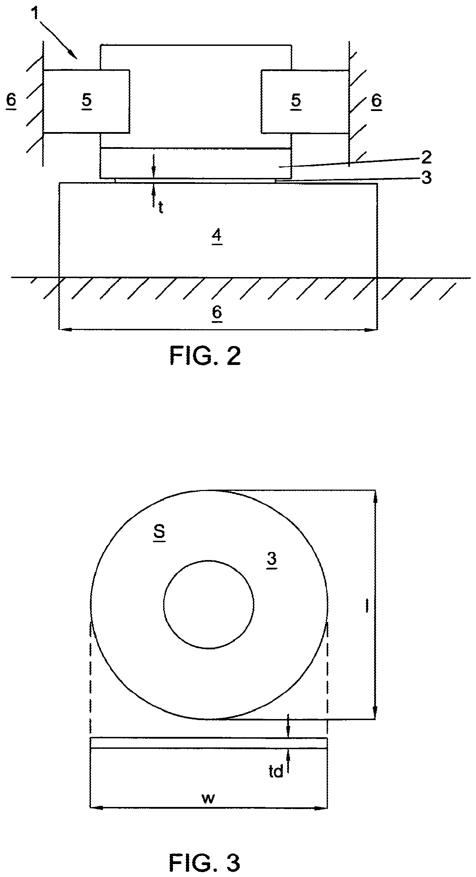

Figure 2 shows a schematic view of a peeling arrangement 1 for exerting pulling forces F to the glass plate 2. The peeling arrangement 1 is arranged to release, and more specifically, peel the glass plate 3 from the support arrangement 4. For this, the peeling arrangement 1 is provided with an abutting arrangement 2 extending along the supporting arrangement 4 and the glass plate 3. The abutting arrangement 2 may be arranged to suck the glass plate 3 to the surface of the abutting arrangement 2. The abutting arrangement can be arranged such that a strong suction, or at least adhesion between the surfaces can be applied, for example caused by one or a combination of underpressure, grease, Van der Waals forces, glue, grease, adhesion fluid or other adhesion means, electrostatic forces, multiple electro or permanent magnets, suction (sucking holes, sucking caps), etc. Preferably, the abutting surface has such a width and length that a surface of at least 700 square centimetres is provided, to be able to pick up large glass plates 3. Preferably, the abutting arrangement 2, or at least the surface thereof, comprises material, for example a coating layer, that is physically softer than the glass plate 3 material, to prevent or decrease damage to the glass plate 3 by the abutting arrangement 2 when the abutting arrangement 2 abuts the glass plate 3. Also it would be advantageous if the coefficient of expansion of the abutting arrangement 2, or at least the surface thereof, is approximately the same as the coefficient of expansion of the glass plate 3. The peeling arrangement 1 is provided with frame parts 5 that support at least part of the peeling arrangement 1, and that may be connected to the ground 6. The frame parts 5 determines the position of the abutting arrangement 2 with respect to the support arrangement 4, for example to prevent that the abutting arrangement 2 puts too much pressure on the glass plate 3 which could damage the glass.

The peeling arrangement 1 is used for releasing relatively large and thin glass plates 3 or the like that have straight surfaces S from support arrangements 4. These glass plates 3 preferably have a small thickness t compared to their surface S (see figures 2, 3). In an embodiment, a suitable glass plate 3 has a thickness d of less than 2 mm, preferably less than 1 mm, for example approximately 0,7 mm. The plate 3 may for example have a maximum length 1 and/or width w of more than 0,3 m, preferably more than 1m (see figure 3), for example approximately 2 m. The ratio between the thickness d and the length or width w can for example be preferably approximately 1: 1000, or higher. The dimensions of the abutting surface of the abutting arrangement 2 may for example be equal or larger than the surface C of the glass plate 3 such that in use the abutting arrangement 2 extends along substantially the whole glass plate 3. However the invention can also be implemented on much smaller scales according to the same principles.

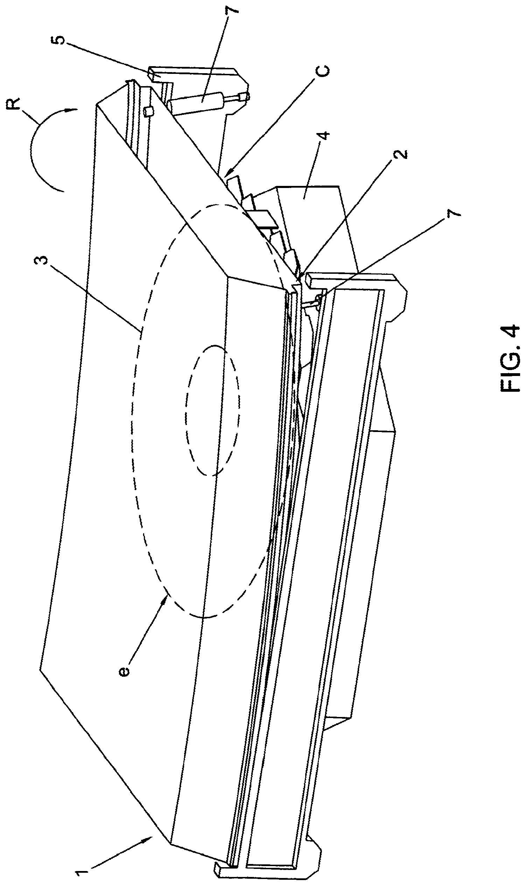

In figure 4 an embodiment of a peeling arrangement 1 is shown, wherein the abutting arrangement 2 comprises a curved abutting surface C, for example part of a cylinder. The abutting surface C can be arranged such that a strong adhesion between the surfaces can be applied, for example caused by one or a combination of underpressure, grease, Van der Waals forces, glue, grease, adhesion fluid or other adhesion means, electrostatic forces, multiple electro or permanent magnets, suction (sucking holes, sucking caps), etc. Preferably the curved abutting surface C has sucking means embodied by for example, magnets (in case the glass plate comprises metal), sucking holes, sucking caps, glue, adhering fluid, other adhesion forces, or the like to suck the glass plate 3 to the abutting surface C. With the sucking means it is possible for the abutting arrangement 2 to exert a pulling force F to the glass plate 3 when the abutting arrangement 2 is moved in a direction away from the support arrangement 4.

In use, the curved abutting surface C is rolled along the glass plate 3 in a direction R, and when the abutting surface C presses the glass plate 3 the glass plate 3 sticks to the abutting surface C. The abutting surface C preferably starts rolling over the glass plate 3 at an outer edge of the glass plate 3. The part of the abutting surface C moving away from the support arrangement 4 after having pressed against the glass plate 3 takes along the glass plate 3 during rolling by exerting a pulling force F, e.g. a sucking force, to the glass plate 3, such that the glass plate 3 is peeled from the supporting arrangement 4. The glass plate 3 sticks to the abutting surface C, and the curve radius of the abutting surface C is such that damage by deformation and/or breaking of the glass plate 3 is prevented. The peeling starts at the edge e, and ends at the opposite edge of the glass plate 3, after which the plate 3 is peeled in its entirety. Advantageously, the glass plate 3 can be peeled or 'unzipped' from the support arrangement too, e.g. row after row, wherein the forces for peeling the plate can be much lower than the total force that might be needed for releasing the total plate 3 at the same time.

As can be seen from figure 4 the peeling arrangement 1 is provided with frame parts 5 which in this case comprise guides. The guides support the abutting arrangement 2 when it is rolled along the glass plate 3, such that it is prevented that the abutting arrangement over presses against the glass plate 3, which could cause damage. In an embodiment, the abutting arrangement 2 is provided with curved flanges 8 that roll over said guides too prevent that the entire weight rolls over the glass plate 3.

In an embodiment, the peeling arrangement 1 is provided with resilient elements, also to be able to prevent damaging the glass plate 3. The peeling arrangement 1 may be provided with actuating elements 7, for example pistons, that drive the abutting arrangement 2 during its rolling action. Also, the actuating elements 7 may support the abutting arrangement 2 and/or comprise resilient elements.

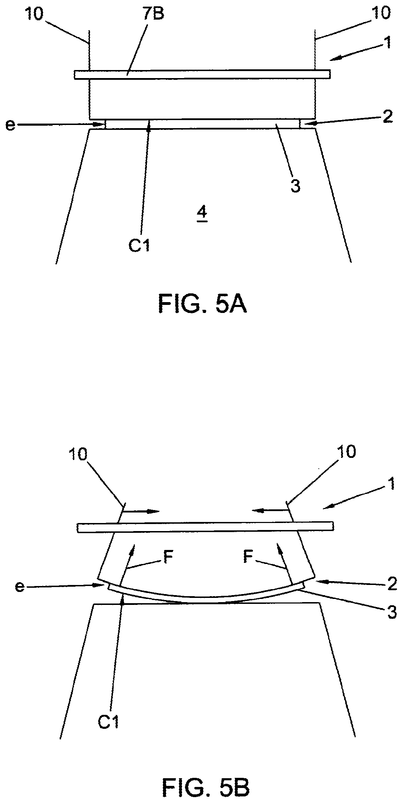

Another embodiment of a peeling arrangement 1 is shown in figure 5A and 5B. The peeling arrangement 1 is provided with an abutting arrangement 2, having an abutting surface C1 that is configured to take on a curved shape for peeling a glass plate 3 (figure 5B). The glass plate 3 may be adhered to the abutting surface C1 in the same way as in the embodiment of figure 4. Because of the adherence properties, the abutting arrangement 2 can exert a pulling force F to the glass plate 3.

Before starting the peeling process, the abutting surface C1 is brought into contact with the glass plate 3, wherein both surfaces, i.e. the contact surface between the glass plate 3 and the abutting surface C1 may be substantially straight (figure 5A). Then, the abutting surface C1 and the glass plate 3 are adhered e.g. by the sucking or adherence properties or the like of the abutting surface C1. Subsequently, the abutting surface C1 is automatically and/or manually bent with respect to the support arrangement 4 while the glass plate is adhered to it, such that also the glass plate 3 is bent (figure 5B). During curving of the abutting surface C1 the glass plate 3 will let go of the support arrangement 4 starting at the edges e, and while the diameter of the curving abutting surface C decreases the glass plate 3 will be lifted from the support arrangement 4 from the edges towards the middle, seen from a front view. In the end adhesion is so low that the glass plate 3 can be released completely from the support arrangement 4 relatively easy. In this embodiment an originally straight abutting surface C1 is made to curve for peeling the glass plate 3. This embodiment may allow for a relatively light weight peeling arrangement and/or relatively controlled movement of the abutting surface C1 with respect to the glass plate 3.

In an embodiment, an actuating element 7B is provided for curving the abutting surface C1. The actuating element 7B may for example comprise a screw thread that protrudes two opposite walls 10 of the peeling arrangement 1, protruding at a straight corner from the abutting surface C1. While turning the screw thread in one direction the two opposite walls move towards each other such that the middle of the surface of the abutting arrangement 2 moves towards the outside and the surface C1 is bent (figure 5B).

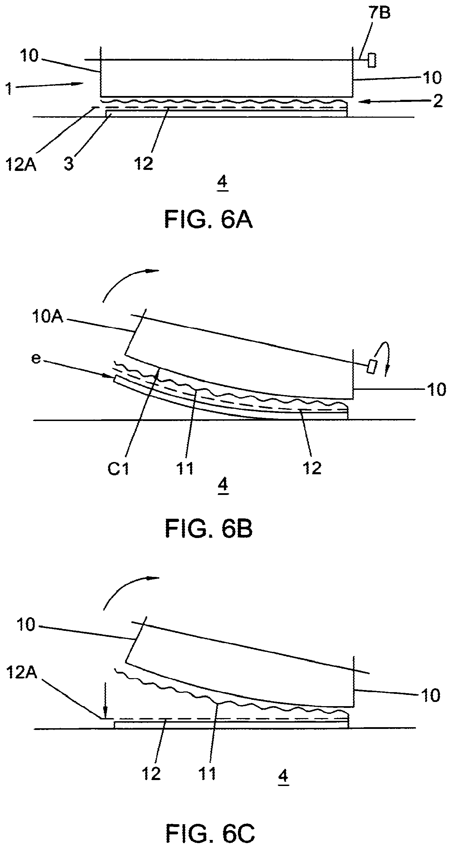

In another exemplary embodiment, one wall 10A is moved in a direction away from the support arrangement 4 such that the abutting surface C1 curves and the glass plate 3 is released at one side edge e instead of two (see fig. 6B) . It will be recognised by the skilled person that there are multiple ways for curving an originally straight abutting surface C1 or rolling an originally curved abutting surface C1.

In an embodiment, the glass plates 3 are cleaned with First Contact® spray or the like, wherein the glass plates 3 may for example comprise large optical plates such as adaptive mirrors. The spray is sprayed on the plate 3, after which it is dried to form a film on the surface of the plate 3. Thereafter the film is taken from the plate 3 such that all the debris sticks to the film and is taken off. According to an embodiment of the invention, the First Contact® spray or the like is used to form a protective foil 12 on the glass plate 3 (e.g. see fig. 6A-C). The spray is sprayed on the glass plate 3, and after it has dried, it forms a protective foil when the abutting arrangement 2 abuts the glass plate 3 for peeling the plate 3 from the supporting arrangement 4, or when placing back the glass plate 3 on the supporting arrangement 4. The use of First Contact® spray or the like can provide for protection and cleaning of the glass plates 3. For the same purpose, other protective layers can also be suitable, for example Pre-cote® or a silicone rubber.

In a further embodiment an adhering fluid is applied to the abutting surface C. This fluid may for example exclude the necessity of separate suction elements or the like in the abutting arrangement 2. Besides, such a fluid could have cleaning properties. In other cases, the glass plate 3 needs to be cleaned anyway such that it is little or no extra effort to apply an adhering fluid.

In figure 6A-C, a further embodiment is shown, wherein the peeling arrangement 1 may have same and/or like features as the arrangement shown in figures 5A and 5B, and is additionally provided with said adhering fluid such as grease or another suitable substance 11 on its abutting surface C1. This substance 11 provides for a certain adhering and/or sucking force on the plate 3. If the substance 11 is provided between the abutting arrangement 2 and the plate 3, the sucking may be the result of a vacuum between the abutting arrangement 2 and the plate 3, which vacuum is caused by the substance 11 driving out the air while pushing the abutting arrangement 2 and the plate 3 together. Instead of grease for example other suitable substances 11 may be applied such as, but not limited to, paste, oil, Vaseline, or other fluids such as normal water, etc. Every time when the substance 11 is put on the abutting arrangement 2 it will surround and/or absorb particles such as dust that otherwise might have caused scratches on the plate 3.

Furthermore, as shown in figures 6A-C, a protective and/or cleaning foil 12 is provided on the glass plate 3. This foil 12 may comprise any suitable foil, such as for example contact spray, an elastomer such as rubber. The foil 12 cleans the plate 3 when it is taken off the plate 3. A further effect may be that the foil 12 can be used to release the plate 3 from the abutting surface C1 while placing back the glass plate 3 on the respective support surface 4 (see fig. 6C). For example, first the abutting surface C1 is straightened and/or the plate 3 is brought into a parallel position with the support surface 4, and thereafter in contact with the support arrangement 4. Thereafter, the glass plate 3 is released from the peeling arrangement 1 by again curving the abutting arrangement 2 while the foil 12 is pressed downwards, for example by holding or pushing a part 12A of the foil 12. In this way the plate 3 does not stick to the abutting arrangement 2 while peeling of the abutting arrangement 2. After that, the foil 12 can be taken off the plate 3.

A method for peeling as shown in figure 6A-C comprises first placing the peeling arrangement 1 above the plate 3, in contact with and parallel to the plate 3. The foil 12 may be provided over the plate 3, and a grease or other suitable substance 11 may be applied to the abutting surface C1, such that said foil 12 and substance 11 are sandwiched between the plate 3 and the abutting arrangement 2. Then, the abutting surface C1 is curved at on side, while pressing the abutting arrangement 2 to the plate 3 at the other side (see fig. 6B), such that the plate 3 is peeled from the support arrangement 4. The plate 3 sticks to the abutting arrangement 3 by a sticking substance 11 such as grease that is applied to the surface C1. After having cleaned or replaced the plate 3, it is placed back on the support arrangement 4 with the aid of the peeling arrangement, preferably by rolling off the abutting arrangement 2 from the plate 3 while holding the foil 12, as explained earlier and shown in figure 6C.

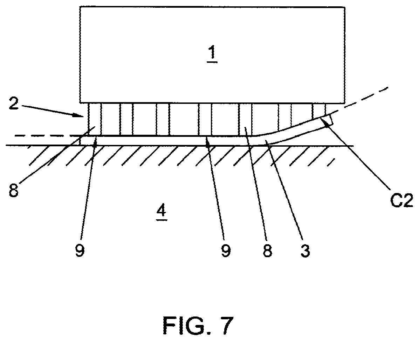

In figure 7 another embodiment is shown, wherein the abutting arrangement 2 comprises an abutting surface C2, drawn by a dashed line, embodied by multiple contact surfaces 9 of abutting elements 8. Within this description, a plurality of contact surfaces can be regarded as one abutting surface C2. The abutting elements 8 may comprise any contact surface or point suitable for applying a pulling force to the glass plate 3, such as for example magnets (if the glass plate comprises metal), sucking caps or holes, etc. In an embodiment, the abutting elements 8 can be retracted with respect to the supporting surface 4, or with respect to the peeling arrangement, to peel the glass plate 3, according to the principles as explained above. In another embodiment, the abutting surface C2 has a preformed curved shape and the abutting arrangement is rolled over the glass plate 3, for example.

In general, the invention can be used for maintaining, handling and/or replacing plates of any brittle material, for example, though not exclusively ceramics and/or Silicon material. The invention may erase to need to prevent separate flat surfaces sticking to each other because they can be separated relatively easily, at least with the aid of the invention. Now the sticking of multiple flat surfaces to each other, e.g. multiple glass plates 3 such as wafers, can be turned into an advantage, e.g. for transport, storage or piling.

In an embodiment, the adaptive optical plate 3 comprises an adaptive optical lens, filter, or mirror, or is a part, for example a layer, of a lens or lens assembly, a filter or filter assembly, a mirror or mirror assembly in an adaptive optical arrangement. As known in the field, stringent requirements apply to such adaptive optical plates 3, i.e. even the slightest damage to these adaptive optical plates 3 would make them unsuitable. The invention prevents causing such damage while it allows efficient handling of the plates 3.

It shall be obvious that the invention is not limited in any way to the embodiments that are represented in the description and the drawings. Many variations and combinations are possible within the scope of the invention as outlined by the claims.

## Claims

1. Method of releasing an adaptive optical plate (3) from an adaptive optical arrangement (4) supporting the adaptive optical plate (3) using a peeling arrangement (1), wherein the plate (3) has a thickness less than 100 times smaller as compared to its width or length, and is supported by the adaptive optical arrangement (4) substantially along its surface, wherein the peeling arrangement (1) comprises an abutting arrangement (2), having an abutting surface (C, C1, C2), for abutting the plate (3), wherein the abutting surface (C, C1, C2) is a curved shape that is rolled along the plate (3) or is automatically and/or manually curved from straight into a curved shape, the method comprising the abutting arrangement (2) sucking or adhering the plate (3) to its abutting surface (C,C1,C2) at the opposite side of the plate (3) to the adaptive optical arrangement (4),
exerting a pulling force to a first area (P1) of the plate (3) from an area of the abutting surface (C,C1,C2) to which the first area (P1) of the plate (3) is being sucked or adhered such that the first area is moved in a direction away (A1) from the adaptive optical arrangement (4), while a second area (P2) of the plate (3) adjacent the first area abuts the adaptive optical arrangement (4), subsequently exerting a pulling force to the second area (P2) from an area of the abutting surface (C,C1,C2) to which the second area (P2) of the plate (3) is being sucked or adhered such that the second area (P2) is moved in a direction away (A1) from the adaptive optical arrangement (4), while a third area (P3) of the plate (3) adjacent the second area abuts the adaptive optical arrangement (4), and in the same manner the abutting arrangement (2) moving sequentially further areas (Pn) in a direction away from the adaptive optical arrangement (4), while respective adjacent areas (Pn+1) abut the adaptive optical arrangement (4),
wherein the abutting arrangement (2) sequentially moves said areas in a direction away from the adaptive optical arrangement (4) in accordance with the curved shape of the abutting surface (C,C1,C2) such that the plate (3) is peeled from the adaptive optical arrangement (4).

2. Method according to claim 1, wherein after being peeled from the adaptive optical arrangement (4), the plate is held at the abutting surface of the abutting arrangement.

3. Method according to claim 2, wherein the abutting surface extends along substantially the entire plate surface.

4. Method according to any of the preceding claims, wherein the plate (3) has a thickness of less than 2 mm, preferably less than 1 mm, and has a length or width of more than 0,3 m, preferably a surface of more than 700 square centimetres.

5. Method according to any of the preceding claims, wherein the radius of curvature of at least a part of the plate and/or the abutting arrangement during or after peeling is substantially between approximately 1 and 100 metres.

6. Assembly (4, 1) of an adaptive optical arrangement (4) for supporting an adaptive optical plate (3) which has a thickness less than 100 times smaller as compared to its width or length and a peeling arrangement (1) for releasing such a plate (3) from the adaptive optical arrangement (4), wherein the adaptive optical arrangement (4) comprises a support surface for supporting the adaptive optical plate (3),
wherein the peeling arrangement (1) is provided with an abutting arrangement (2) extending along the supporting surface, such that in use the abutting arrangement (2) and the supporting surface abut opposite surfaces of the plate (3),
wherein the peeling arrangement (1) is provided with a frame (5) for supporting the abutting arrangement (2), which frame is arranged to determine the position of the abutting arrangement (2) with respect to the adaptive optical arrangement (4),
and wherein the abutting arrangement (2) comprises an abutting surface (C,C1,C2) which is arranged to adhere to or to suck a surface of the plate (3) and has a curved shape which in use is rolled along the plate (3) or is arranged to retract in parts along a curved shape for curving the plate (3), and wherein the abutting arrangement (2) is arranged to increase the distance from the adaptive optical arrangement (4) subsequently at adjacent locations for peeling of the plate (3) from the adaptive optical arrangement (4).

7. Assembly according to claim 6, wherein the abutting surface is at least 700 square cm.

8. Assembly according to any of claims 6-7, wherein the abutting arrangement (2) is provided with an actuating element for curving the plate.

9. Assembly according to any of claims 6-8, wherein the abutting arrangement (2) has an abutting surface that is approximately equally sized to the plate or has a width and length of at least 700 square centimetres.

## Patentansprüche

1. Verfahren zum Ablösen einer adaptiven optischen Patte (3) von einer adaptiven optischen Anordnung (4), welche die adaptive optische Platte (3) trägt, unter Verwendung einer Abziehanordnung (1),
wobei die Platte (3) eine Dicke von weniger als 100 mal kleiner im Vergleich zu ihrer Breite oder Länge hat und von der adaptiven optischen Anordnung (4) im Wesentlichen entlang ihrer Oberfläche getragen wird,
wobei die Abziehanordnung (1) eine anstoßende Anordnung (2) umfasst mit einer Anlageoberfläche (C, C1, C2) zum Anliegen an der Platte (3), wobei die Anlageoberfläche (C, C1, C2) eine gekrümmte Form ist, die entlang der Platte (3) gerollt wird oder automatisch und/oder von Hand von einer geraden in eine gekrümmte Form gekrümmt wird,
das Verfahren umfassend:
Saugen oder Kleben der Platte (3) auf ihrer Anlageoberfläche (C, C1, C2) der anstoßenden Anordnung (2) auf der der adaptiven optischen Anordnung (4) gegenüberliegenden Seite der Platte (3),
Ausüben einer Zugkraft auf einen ersten Bereich (P1) der Platte (3) von einem Bereich der Anlageoberfläche (C, C1, C2), an den der erste Bereich (P1) der Platte (3) angesaugt oder befestigt ist, sodass der erste Bereich in einer Richtung weg (A1) von der adaptiven optischen Anordnung (4) bewegt wird, während ein zweiter Bereich (P2) der Platte (3) benachbart dem ersten Bereich an der adaptiven optischen Anordnung (4) anliegt,
nachfolgend Ausüben einer Zugkraft auf den zweiten Bereich (P2) von einem Bereich der Anlageoberfläche (C, C1, C2), an den der zweite Bereich (P2) der Platte (3) angesaugt oder befestigt ist, sodass der zweite Bereich (P2) in einer Richtung weg (A1) von der adaptiven optischen Anordnung (4) bewegt wird, während ein dritter Bereich (P3) der Platte (3) benachbart dem zweiten Bereich an der adaptiven optischen Anordnung (4) anliegt,
und in der gleichen Weise nacheinander Bewegen weiterer Bereiche (Pn) in einer Richtung weg von der adaptiven optischen Anordnung (4) durch die anstoßende Anordnung (2), während entsprechende benachbarte Bereiche (Pn+1) an der adaptiven optischen Anordnung (4) anliegen,
wobei die anstoßende Anordnung (2) die Bereiche nacheinander in einer Richtung weg von der adaptiven optischen Anordnung (4) gemäß der gekrümmten Form der Anlageoberfläche (C, C1, C2) bewegt, sodass die Platte (3) von der adaptiven optischen Anordnung (4) abgezogen wird.

2. Verfahren gemäß Anspruch 1, wobei die Platte, nachdem sie von der adaptiven optischen Anordnung (4) abgezogen wurde, an der Anlageoberfläche der anstoßenden Anordnung gehalten wird.

3. Verfahren gemäß Anspruch 2, wobei sich die Anlageoberfläche im Wesentlichen entlang der gesamten Plattenoberfläche erstreckt.

4. Verfahren gemäß einem der vorhergehenden Ansprüche, wobei die Platte (3) eine Dicke von weniger als 2 mm, bevorzugt weniger als 1 mm hat und eine Länge oder Breite von mehr als 0,3 m, bevorzugt eine Fläche von mehr als 700 Quadratzentimetern hat.

5. Verfahren gemäß einem der vorhergehenden Ansprüche, wobei der Krümmungsradius mindestens eines Teils der Platte und/oder der anstoßenden Anordnung während oder nach dem Abziehen im Wesentlichen zwischen ungefähr 1 und 100 Metern beträgt.

6. Anordnung (4, 1) einer adaptiven optischen Anordnung (4) zum Tragen einer adaptiven optischen Platte (3), die eine Dicke von weniger als 100 mal kleiner im Vergleich zu ihrer Breite oder Länge hat, und eine Abziehanordnung (1) zum Lösen solch einer Platte (3) von der adaptiven optischen Anordnung (4), wobei die adaptive optische Anordnung (4) eine Tragefläche zum Tragen der adaptiven optischen Platte (3) umfasst,
wobei die Abziehanordnung (1) mit einer anstoßenden Anordnung (2) ausgebildet ist, die sich entlang der Trägeroberfläche erstreckt, sodass in der Verwendung die anstoßende Anordnung (2) und die Trägeroberfläche an gegenüberliegenden Oberflächen der Platte (3) anliegen,
wobei die Abziehanordnung (1) mit einem Rahmen (5) zum Tragen der anstoßenden Anordnung (2) ausgebildet ist, wobei der Rahmen angeordnet ist, um die Position der anstoßenden Anordnung (2) bezüglich der adaptiven optischen Anordnung (4) zu bestimmen,
und wobei die anstoßende Anordnung (2) eine Anlageoberfläche (C, C1, C2) umfasst, die dazu angeordnet ist, eine Oberfläche der Platte (3) zu befestigen oder anzusaugen, und eine gekrümmte Form hat, die in der Verwendung entlang der Platte (3) gerollt wird oder dazu angeordnet ist, sich in Teilen entlang einer gekrümmten Form zum Krümmen der Platte (3) zurückzuziehen, und
wobei die anstoßende Anordnung (2) dazu angeordnet ist, den Abstand von der adaptiven optischen Anordnung (4) nacheinander an benachbarten Orten zu vergrößern, um die Platte (3) von der adaptiven optischen Anordnung (4) abzuziehen.

7. Anordnung gemäß Anspruch 6, wobei die Anlageoberfläche mindestens 700 Quadratzentimeter groß ist.

8. Anordnung gemäß einem der Ansprüche 6 bis 7, wobei die anstoßende Anordnung (2) mit einem Betätigungselement zum Biegen der Platte ausgebildet ist.

9. Anordnung gemäß einem der Ansprüche 6 bis 8, wobei die anstoßende Anordnung (2) eine Anlageoberfläche hat, die ungefähr gleich groß wie die Platte ist, oder eine Breite und Länge von mindestens 700 Quadratzentimetern hat.

## Revendications

1. Procédé de libération d'une plaque optique adaptative (3) d'un ensemble optique adaptatif (4) supportant la plaque optique adaptative (3) à l'aide d'un ensemble de pelage (1), dans lequel la plaque (3) présente une épaisseur moins de 100 fois inférieure à sa largeur ou sa longueur, et est supportée par l'ensemble optique adaptatif (4) sensiblement le long de sa surface, dans lequel l'ensemble de pelage (1) comprend un ensemble de butée (2), ayant une surface de butée (C, C1, C2), destinée à buter contre la plaque (3), dans lequel la surface de butée (C, C1, C2) est une forme incurvée qui est enroulée le long de la plaque (3) ou est automatiquement et/ou manuellement passée d'une forme droite à une forme incurvée, le procédé comprenant
l'ensemble de butée (2) qui aspire ou fait adhérer la plaque (3) contre sa surface de butée (C, C1, C2) au niveau du côté opposé de la plaque (3) par rapport à l'ensemble optique adaptatif (4),
l'application d'une force de traction sur une première zone (P1) de la plaque (3) depuis une zone de la surface de butée (C, C1, C2) contre laquelle la première zone (P1) de la plaque (3) est aspirée ou adhérée de sorte que la première zone soit déplacée dans une direction qui s'éloigne (A1) de l'ensemble optique adaptatif (4), tandis qu'une seconde zone (P2) de la plaque (3) adjacente à la première zone bute contre l'ensemble optique adaptatif (4),
l'application, ensuite, d'une force de traction sur la seconde zone (P2) depuis une zone de la surface de butée (C, C1, C2) contre laquelle la seconde zone (P2) de la plaque (3) est aspirée ou adhérée de sorte que la seconde zone (P2) soit déplacée dans une direction qui s'éloigne (A1) de l'ensemble optique adaptatif (4), tandis qu'une troisième zone (P3) de la plaque (3) adjacente à la seconde zone bute contre l'ensemble optique adaptatif (4),
et, de la même manière, l'ensemble de butée (2) déplaçant d'autres zones (Pn) dans une direction qui s'éloigne de l'ensemble optique adaptatif (4), tandis que les zones adjacentes respectives (Pn+1) butent contre l'ensemble optique adaptatif (4),
dans lequel l'ensemble de butée (2) déplace séquentiellement lesdites zones dans une direction qui s'éloigne de l'ensemble optique adaptatif (4) selon la forme incurvée de la surface de butée (C, C1, C2) de sorte que la plaque (3) soit pelée de l'ensemble optique adaptatif (4).

2. Procédé selon la revendication 1, dans lequel, après avoir été pelée de l'ensemble optique adaptatif (4), la plaque est maintenue au niveau de la surface de butée de l'ensemble de butée.

3. Procédé selon la revendication 2, dans lequel la surface de butée s'étend sensiblement le long de la surface entière de la plaque.

4. Procédé selon l'une quelconque des revendications précédentes, dans lequel la plaque (3) présente une épaisseur de moins de 2 mm, de préférence de moins de 1 mm, et présente une longueur ou une largeur de plus de 0,3 m, de préférence une surface de plus de 700 centimètres carrés.

5. Procédé selon l'une quelconque des revendications précédentes, dans lequel le rayon de courbure d'au moins une partie de la plaque et/ou de l'ensemble de butée pendant ou après le pelage est sensiblement compris entre environ 1 et 100 mètres.

6. Ensemble (4,1) d'un ensemble optique adaptatif (4) destiné à supporter une plaque optique adaptative (3) qui présente une épaisseur inférieure à 100 fois sa largeur ou sa longueur, et d'un ensemble de pelage (1) destiné à libérer ladite plaque (3) de l'ensemble optique adaptatif (4), dans lequel l'ensemble optique adaptatif (4) comprend une surface de support destinée à supporter la plaque optique adaptative (3),
dans lequel l'ensemble de pelage (1) est muni d'un ensemble de butée (2) s'étendant le long de la surface de support, de sorte que, pendant l'utilisation, l'ensemble de butée (2) et la surface de butée butent contre les surfaces opposées de la plaque (3),
dans lequel l'ensemble de pelage (1) est muni d'un cadre (5) destiné à supporter l'ensemble de butée (2), ledit cadre étant prévu pour déterminer la position de l'ensemble de butée (2) par rapport à l'ensemble optique adaptatif (4),
et dans lequel l'ensemble de butée (2) comprend une surface de butée (C, C1, C2) qui est prévue pour adhérer à ou coller une surface de la plaque (3) et présente une forme incurvée qui, pendant l'utilisation, est enroulée le long de la plaque (3) ou est prévue pour se rétracter par parties le long d'une forme incurvée destinée à incurver la plaque (3), et
dans lequel l'ensemble de butée (2) est prévu pour augmenter par la suite la distance par rapport à l'ensemble optique adaptatif (4) au niveau des emplacements adjacents de pelage de la plaque (3) de l'ensemble optique adaptatif (4).

7. Ensemble selon la revendication 6, dans lequel la surface de butée mesure au moins 700 centimètres carrés.

8. Ensemble selon l'une quelconque des revendications 6 et 7, dans lequel l'ensemble de butée (2) est muni d'un élément d'actionnement destiné à incurver la plaque.

9. Ensemble selon l'une quelconque des revendications 6 à 8, dans lequel l'ensemble de butée (2) possède une surface de butée qui est approximativement de la même taille que la plaque, ou qui présente une largeur et une longueur d'au moins 700 centimètres carrés.
